# EUROPEAN PATENT SPECIFICATION

(11) **EP 0 408 064 B1**
(45) Date of publication and mention of the grant of the patent: **02.11.1994**
(21) Application number: 90113466.8
(22) Date of filing: 13.07.1990
(51) Int. Cl.: B60R 21/20

(54) **Arrangement for forming an air bag deployment opening**
Anordnung zum Formen einer Öffnung zum Aufblasen eines Luftkissens
Aménagement constituant une ouverture pour un déploiement de coussin gonflable

(30) Priority: 14.07.1989 US 380156; 23.01.1990 US 471922
(43) Date of publication of application: 16.01.1991
(60) Divisional application: 93120748.4
(73) Proprietor: TIP ENGINEERING GROUP, INC., Farmington Hills, MI 48018 (US)
(72) Inventor: Bauer, David J., West Bloomfield, Michigan 48322 (US)
(74) Representative: Schaumburg, Thoenes & Thurn

(56) References cited:
- EP-A- 0 381 144
- DE-A- 2 053 565
- DE-A- 3 545 028
- US-A- 3 632 136

## Description

This invention concerns auto safety systems and more particularly inflatable cushion devices commonly referred to as "air bags". In such devices, a fabric cushion (the air bag) is stored in a folded condition within a receptacle defining a storage space within the vehicle passenger compartment. Upon activation of a crash sensor detecting an imminent high velocity impact, the air bag is inflated with a chemically generated gas and deployed in a manner and position calculated to absorb the impact of the driver or passenger thrown forward as the vehicle is sharply decelerated at impact.

The folded air bag, gas generator, and other components of the system may be stored within a receptacle mounted in the steering wheel or behind the instrument panel forward of the passenger seat, covered by one or more doors which are opened by pressure generated by the inflating air bag.

The receptacle must be stored in a manner which is tamper-proof, yet allowing instantaneous deployment of the air bag upon system activation. Further, the covering must resist normal pressure exerted thereon as by incidental contact with the vehicle occupants.

Prior art systems have typically involved exteriorly visible patterns on the surface instrument panel or steering wheel covers delineating the openings therein through which the air bag will be deployed.

The presence of the visible pattern reduces the aesthetic appeal of the interior trim surfaces and is disturbing to many persons as it makes the presence and possible pending deployment of the air bag obvious. This visible pattern also makes the system more vulnerable to tampering because of its evident location.

The usual approach in designing a closure is to provide a hinged door latched by a detent mechanism or snap fitted portions forced apart by the pressure of the inflating air bag. See US-A-4,327,937 for an example of such a covering.

Another common approach is to provide an exteriorly visible line of weakening in a covering skin which is ruptured by the air bag upon deployment. See for examples of such a design US-A-4,400,010 and US-A-4,334,699
US-A-3,640,546 discloses a preweakened covering skin over closure doors but the seam skin is unsupported along the seam, and thus the seam would be tactilely perceptible and also, over time, would also become visible due to the absence of any support underneath.

Another approach is described in US-A-3,632,136 in which a powerful linear shaped explosive charge is used to sever a door lock and reinforcing panel to release a locked door just prior to deployment of the air bag to enable the door to be pushed open by the air bag.

In all of the above designs, the outline of the closure is suggested, and some also result in the showering of debris into the passenger compartment when the system is activated.

Most designs also use separately manufactured and installed covering doors, which increases the cost of manufacture of the air bag installation.

In not prepublished EP-A-0 381 144 there is disclosed an invisible closure utilizing a length of detonation cord to create an air bag deployment opening in an interior auto body panel to avoid any suggestion that an air bag is installed therein.

A similar device is known from DE-A-3 545 028 which describes the features of the preambles of claims 1 and 2.

The problem to be solved by the present invention is to provide an invisible air bag installation by the controlled application of energy to cut through the covering skin of a seamless expanse of a trim panel, in a pattern shaped so as to form a deployment opening immediately above an air bag receptacle mounted behind the trim panel.

The invention solves this problem by the features described in claim 1 or 2. Advantageous further developments are specified in the subclaims.

According to the invention, the remaining portions of the trim panel adjacent about the pattern are easily able to be pushed aside by inner door panels opened by the expanding air bag to enable deployment through the opening.

The air bag covering is thus integrated with the trim piece, and does not require separate manufacture or assembly to the trim piece.

In a first embodiment, a linear thermal generating element is utilized, comprised of a length of material composed of contiguous pieces of dissimilar metals, and is mounted within the trim panel adjacent a covering outer skin layer in the pattern of the deployment opening, which element when activated causes very rapid alloying of the metals. The alloying process generates sufficient heat to almost instantly degrade the skin layer in the desired pattern. The deploying air bag is able to readily sever the remaining portions of the trim panel along the pattern and thus open the door so formed.

In another embodiment, a linear explosive charge is confined within a length of tubing extending within the trim panel in the pattern of the opening to be formed therein; the tube is tooled and positioned with a series of holes facing the covering skin portions to be severed. The products generated by the detonation of the charge within the tube pass out through the openings as pressurized gas so that the force of the explosion is confined and directed to sever only the covering skin and adjacent panel material. This results in reliable formation of the deployment opening in a trim panel while reducing blast and eliminating showering of debris into the passenger compartment.

In a third embodiment, another form of linear explosive is utilized, comprised of a tube arranged within the trim panel in the pattern of the deployment opening. The tube has a layer of explosive deposited about its interior and is slit along its length, on the side adjacent the panel portion to be severed, so that upon detonation of the explosive, the blast opens the tube along the slit and a flame front is directed outwardly in that direction. The concentrated flame front severs the skin of the trim panel, to reliably form the deployment opening without creating a blast of particulates or other debris directed into the passenger compartment upon activation.

In each embodiment, one or more rigid inner door panels are forced open by the deploying air bag and sever the remaining portions and pushes open the covering so formed as the air bag is inflated.

Each of these embodiments provide a visually and tactilely imperceptible and tamper proof covering for an air bag installation located behind an automobile interior trim panel or piece, which opens reliably to enable proper deployment of the air bag within the very short time period required.

The energy applying linear element may be combined with a mechanical preweakening of the covering skin in a pattern matching that of the linear elements. This mechanical preweakening is accomplished by cutting a groove into the inside surface of the skin to a carefully controlled depth to provide for a consistent preweakening of the skin in a matching pattern to argument the effect of activation of the linear element.

In the following, the invention will be further described with reference to the drawings in which
FIGURE 1 is a perspective fragmentary view in phantom of the forward position of an automobile illustrating air bag covering installations according to the present invention.
FIGURE 2 is a transverse sectional view of a trim panel having an arrangement of linear thermal generators mounted embedded therein to enable an air bag deployment opening to be formed therein according to the present invention.
FIGURE 3 is an enlarged fragmentary perspective view of the arrangement of a trim panel and thermal generator elements according to the present invention.
FIGURE 4 is a fragmentary perspective view of an instrument panel having an alternate air bag deployment opening forming arrangement according to the present invention.
FIGURE 5 is a tranverse sectional view of the instrument panel and opening forming arrangement shown in FIGURE 4.
FIGURE 6 is a tranverse sectional view through an instrument panel and yet another embodiment of an opening forming arrangement according to the prevent invention.
FIGURE 7 is a perspective view of the shock tube element incorporated in the opening forming arrangement shown in FIGURE 6.
FIGURES 8 to 10 show the combination of the invention with a mechanical preweakening.

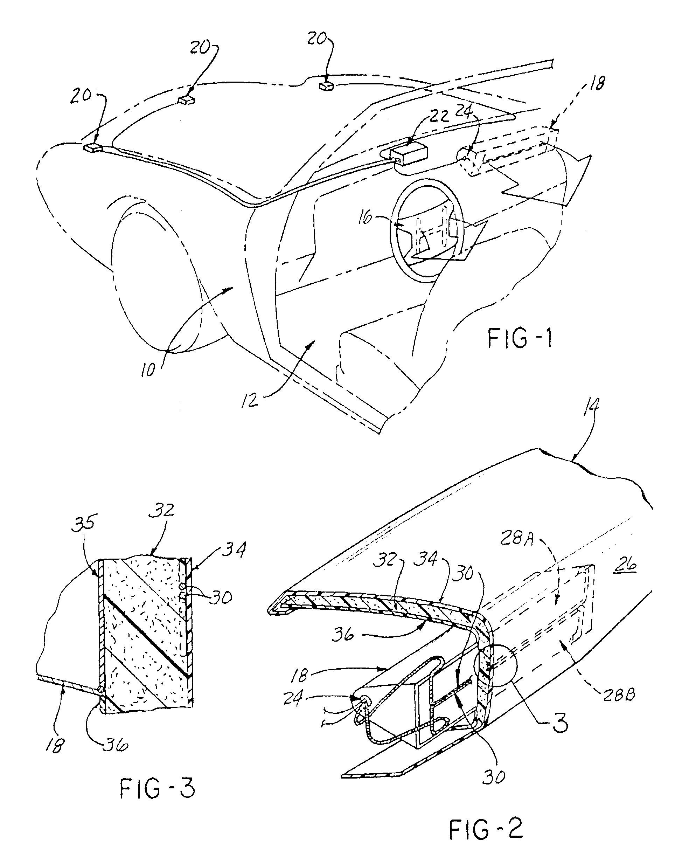

Referring to FIGURE 1, the major components of an air bag safety system are depicted installed in an automobile. The automobile body 10 has a passenger compartment 12, with various trim panels or pieces finishing the interior thereof.

The air bag system may include a passenger side air bag stored behind an instrument panel 14 and a driver aide air bag stored beneath a steering wheel cover 16, the instrument panel 14 and steering wheel cover 16 each comprising such an interior trim panel or piece arrayed about the passenger compartment.

Each air bag installation includes a receptacle 18 containing a folded air bag, which is deployed into the passenger compartment by being inflated with a gas in the manner well known to those skilled in the art. A plurality of crash sensors 20 are arranged about the front of the vehicle which upon the occurrence of a severe collision, generate electrical signals received by a control unit 22, which in turn activates the gas generator contained within the receptacle 18.

Since such air bag systems are well known in the art, and the present invention is not concerned with the details thereof, a description of these details is not here set out.

Suffice it to say that the gas generators typically are activated by an ignitor assembly 24 which upon receiving an electrical signal, ignite a chemical charge to produce a high temperature reaction which in turn initiates the chemical reaction producing a large volume of nitrogen gas for inflation of the air bag.

As described above, the air bag must be stored ready for deployment until such collision occurs.

According to the concept of the present invention, a deployment opening is formed by the controlled application of concentrated energy onto a smooth, uninterrupted expanse of a trim panel, wheel cover, or other piece behind which is mounted an air bag, at the instant of deployment of the air bag.

Such opening is almost instantly formed by the very rapid application to the covering skin therein of energy sufficient to form a line of separation in a pattern shaped to form three sides of a single covering outer door, or of a pair of covering outer doors, with the other side or sides bent by the force of the inflating air bag bent by the force of the inflating air bag to act as a hinge to open the door so formed.

The trim panel or piece is constructed so that the so that the remaining portions thereof in the region above the air bag receptacle are sufficiently weakened to be easily severed by receptacle doors pushed open by the air bag itself.

A first embodiment of the invention is illustrated in the application of the invention to a so-called midmount installation, which is shown in Figures 1-3. A pair of such covering doors 28A and 28B are formed at the instant of system activation into a smooth expanse 26 of the instrument panel 14, hinged along opposite sides in moving to form a deployment opening.

In this first embodiment of the present invention, lengths of linear thermal generating elements 30 are embedded in the instrument panel 14 in the described double door pattern over the air bag receptacle 18. As shown in Figure 3, the elements 30 are located just below the covering outer layer here comprised of a vinyl skin 34. The trim panel such as the instrument panel 14 is constructed to have sufficient structural integrity to enable assembly and to resist normal contact pressures. Such construction is typically provided by a stiff underlayer 36 of metal or rigid plastic over lain by a layer of soft foam 32 and covered by the skin 34.

According to the concept of the present invention, the underlayer 36 has an opening formed therein shaped to allow the air bag receptacle 18 to be received thereinto, leaving only the layer of foam 32 and the skin 34 above a hinged inner door or doors 35 covering the receptacle 18. Such inner doors 35 may alternatively be incorporated in the instrument panel 14. The receptacle 18 is mounted as by bracketing (not shown) to be supported beneath the instrument panel 14 in the position shown in FIGURE 3.

The thermal generating elements 30 may comprise a material consisting of two diverse metallic elements in intimate contact with each other. When these elements are subjected to an initiating temperature, a very rapid alloying reaction occurs, in which a great amount of heat is released. Such material in thin wire or ribbon form, comprises an outer core of a palladim alloy and an inner core of aluminum alloy is commercially available under the trademark "PYROFUZE" (TM) from Pyrofuze Corp. of Mount Vernon, NY.

Preferably, several of these elements each of small diameter, i.e. 0,1 or 0,13 mm (0,004 or 0,005 inches) thick, are twisted together to generate sufficient heat while maintaining the very high speed reaction required.

This reaction is not explosive and results in a heat degradation of the vinyl skin 34 in the pattern of the element 30 sufficient to allow the inner doors 35 and deploying air bag to push out and separate the adjoining sections of the foam layer 32 thereof.

The elements 30 may be directly connected to the air bag ignitor assembly 24, thereby insuring coordinated activation simultaneously with the air bag deployment.

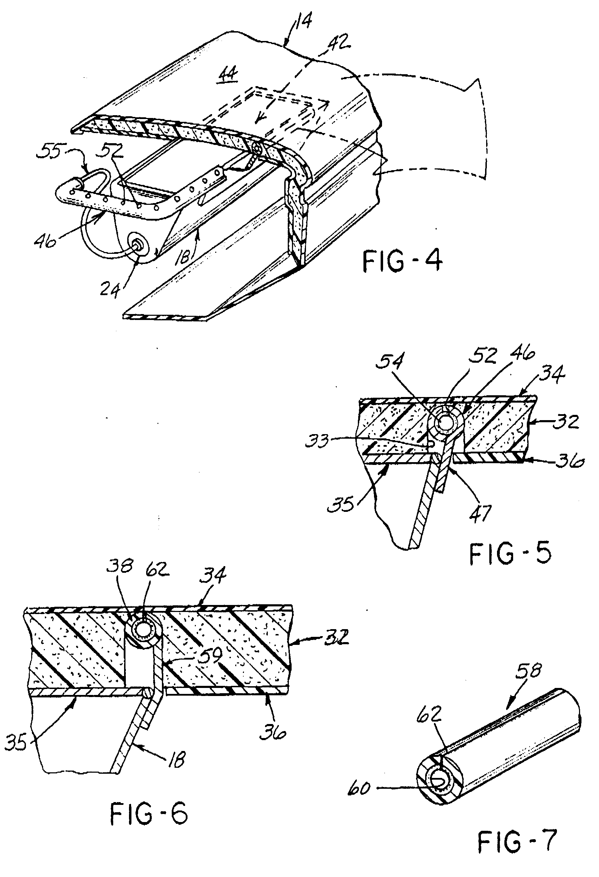

An alternate embodiment is shown in FIGURES 4 and 5, illustrated applied to a "topmount" application in which a single outer door 42 is formed in a smooth expanse 44 of a horizontal surface of the instrument panel 14 to allow deployment of the air bag stored in the receptacle 18 directly beneath the door 42.

In this instance a length of tube 46 of the desired configuration is positioned within a slot 33 let into the foam core 32, firmly mounted by being secured to one side of the air bag receptacle 18 with tabs 47.

The tubing 46 has a series of holes 52 directed outwardly towards the skin 34. A length of detonating cord 54 is disposed within the tube 46 and detonated by transmission of shock via a connector tube 55 with the ignitor assembly 24 of the air bag system itself so as to be simultaneously discharged. The detonating cord 54 may be commercially available as low power "Primaline" (TM).

As a result, a series of gas pressure jets are directed to perforate or otherwise degrade the skin 34 in the pattern outlining the door 42 so as to allow easy separation of the door 42 upon contact with the expanding air bag. The confinement of the detonating cord 54 within the tube 46 attenuates the intensity of the blast and eliminates the directing of any debris into the passenger compartment.

Yet another embodiment is shown in FIGURES 6 and 7, in which a split sleeve type linear element 58 is embedded in the foam core 32 lying beneath the skin 34, arranged in a pattern corresponding to the door to be formed. The element 58 is secured to the receptacle 18 with formed tabs 59. A thin layer of explosive 60 coats the inside of a plastic tube 61. When detonated, a flame front propagates extremely rapidly along the slit 62, which is forced open by the pressure generated by detonation.

This flame front very effectively slices through the skin 34 to form the door through the unmarked expanse of instrument panel 14.

Such material is available under the trademark "NONEL" from the Ensign-Bickford Company of Simsbury, Connecticut.

The invention provides a strong tamper proof covering of the air bag receptacle which is invisible to the vehicle occupants, yet instantly provides an opening for proper deployment of the air bag upon activation of the system. By integrating the covering doors into the trim piece itself, the overall cost of manufacture is reduced and the system is simplified.

The arrangement according to the present invention while illustrated for passenger side air bag installations may also be employed for driver side air bags, by similar design of the steering wheel cover 16.

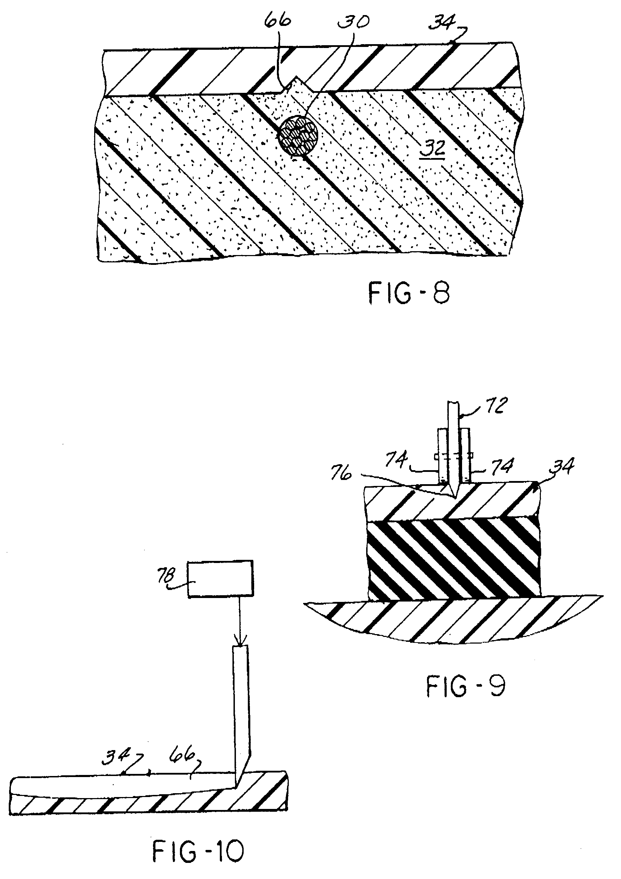

The above described arrangements may also be combined with a mechanical preweakening of the outer layer covering skin 34, as depicted in FIGURE 8.

This preweakening must be able to be accomplished to a uniformly consistent level in production.

According to this aspect of the concept of the present invention, this preweakening is achieved by cutting into the skin 34 along the inside surface thereof to form a groove 66 of a consistently controlled depth, and extending in the pattern of the opening to be formed. The groove 66 thus lies above the linear element.

As noted, it is critical that the partial cutting of the inside of the skin 34 be consistently held to the designed depth. FIGURE 9 illustrates how this can be effectively done. A suitable cutting blade 72 has mounted to it guide elements 74 such as rollers adapted to rest on the surface of the skin 34 as the blade 72 traverses the skin 34. The distance below the surface of the skin 34 that the cutting edge 76 protrudes corresponds to the depth of cut, and should be set accordingly.

According to one aspect of this method, substantial compression of the skin material below the cutting edge 76 should be avoided in order to achieve a consistent depth. This requirement may be met by placing the skin 34 on a bed of a more easily compressed material than that of the skin, i.e., for example a layer of neoprene rubber 77 may be placed beneath a vinyl skin. This allows a slight deflection of the vinyl skin away from the cutting edge 76 to relieve excessive compression leading to erractic and inconsistent results.

The partial cutting of the inside of the skin 34 can also be varied across the width of the disclosure, from a maximum depth at the center to a reduced depth at either side as shown in FIGURE 10. This can be done by varying the depth of the cut 66, as by a cam control 78 or other arrangement. This configuration can insure beginning of the tear at the center and propagation to either side.

Thus, the activation of the element 30 can partially further degrade the skin 34 (and foam 32) in the pattern, with the force of the deploying air bag then mechanically severing the skin 34 along the preweakening groove 66. The reliably severed, combined effect can provide an exteriorly invisible seam forming the air bag deployment opening.

## Claims

1. In an automotive passenger compartment installation for an air bag comprised of a receptacle (18) containing a folded cushion adapted to be expanded with gas, said air bag thereby able to be deployed into said passenger compartment (12) of an automobile, said receptacle mounted behind a trim panel (14) within said passenger compartment (12), said trim panel (14) having a smooth uninterrupted expanse of outer surface of an overlying skin (34) facing the inside of said passenger compartment (12), a rigid underlayment (32, 36) beneath said trim panel skin (34) having an opening in the shape of said pattern and aligned with said receptacle (18), and a linear element (46, 58) shaped in the pattern of one or more closures (28A, B) mounted above said underlayment (32, 36) and beneath said trim panel skin (34) and overlying said opening, **characterised** by said linear element comprising a length of tubing (46, 58) having an explosive material (54, 60) enclosed therein, said length of tubing (46, 58) having one or more openings (52, 62) configured to direct the energy generated when said explosive material (54, 60) is detonated outwardly along the length thereof to degrade only said trim panel skin (34) in said pattern, and means (24) for detonating said explosive material (54, 60) in said length of tubing (46, 58) just prior to deployment of said air bag and thereby enable deployment of said air bag through the opening formed in said trim panel (14).

2. In an automotive passenger compartment installation for an air bag comprised of a receptacle (18) containing a folded cushion adapted to be expanded with gas, said air bag thereby able to be deployed into said passenger compartment (12) of an automobile, said receptacle mounted behind a trim panel (14) within said passenger compartment (12), said trim panel (14) having a smooth uninterrupted expanse of outer surface of an overlying skin (34) facing the inside of said passenger compartment (12), a rigid underlayment (32, 36) beneath said trim panel skin (34) having an opening in the shape said pattern and aligned with said receptacle (18) and a linear element (30) shaped in the pattern of one or more closures (28A, B) mounted above said underlayment (32, 36) and beneath said trim panel skin (34) and overlying said opening, **characterised** by said linear element including an elongated element (30) located just below said trim panel skin (34) generating a great amount of heat without an explosive reaction when activated to apply heat energy along the length thereof sufficient to degrade only said trim panel skin (34) in said pattern, and means (24) for activating said elongated element (30) just prior to deployment of said air bag and thereby enable deployment of said air bag through the opening formed in said trim panel (14).

3. The air bag installation according to claim 1, wherein said length of tubing (46) has a series of outwardly directed holes (52) formed along the length thereof, and further includes a linear explosive charge (54) extending within said tube (46), said charge (54) generating pressurized gases when detonated said pressurized gases passing out through said holes (52) and resulting in degradation of said trim panel skin (34).

4. The air bag installation according to claim 1, wherein said length of tubing (58) is slit along the length thereof on the outer side, and further including an explosive charge (60) distributed along and within said tubing (58) discharged by said activation of said linear element, directing a flame front at said trim panel skin (34).

5. The air bag installation according to claim 2, wherein said linear element is composed of a plurality of elongated metal elements (30) of dissimilar metals, in intimate contact, said metals alloying together with the release of heat energy upon acitivation by electrical excitation until a reaction temperature is achieved.

6. The air bag installation according to any one of the foregoing claims, wherein said trim panel (14) is a rigid unitary construction having a soft foam core (32) underlying said skin (34).

## Patentansprüche

1. Airbag-Installation in der Fahrgastzelle eines Kraftfahrzeugs, die einen Behälter (18) umfaßt, der ein gefaltetes Kissen enthält, welches mit Gas aufgeblasen werden kann, wodurch sich der Airbag in die Fahrgastzelle (12) eines Kraftfahrzeugs hinein entfalten kann, wobei der Behälter hinter einem Armaturenbrett (14) in der Fahrgastzelle (12) montiert ist, wobei das Armaturenbrett (14) eine dem Innenraum der Fahrgastzelle (12) zugewandte Außenhaut (34) mit sich gleichmäßig und ohne Unterbrechung erstreckender Außenfläche, eine steife Unterfütterung (32,36) unter der Haut (34) des Armaturenbretts mit einer der Form dieses Musters entsprechenden und mit dem Behälter (18) fluchtenden Öffnung und ein lineares Element (46,58) hat, das in dem Muster eines oder mehrerer Verschlüsse (28A,B) geformt ist, über der Unterfütterung (32,36) und unter der Haut (34) des Armaturenbretts befestigt ist und über der Öffnung liegt, dadurch gekennzeichnet, daß das lineare Element einen Rohrabschnitt (46,58) umfaßt, in welchem Explosionsmaterial (54,60) eingeschlossen ist, wobei der Rohrabschnitt (46,58) eine oder mehrere Öffnungen (52,62) hat, die so konfiguriert sind, daß sie die bei der Detonation des Explosionsmaterial (54,60) erzeugte Energie entlang dessen Länge nach außen richten, um nur die Haut (34) des Armuturenbretts in diesem Muster zu zerstören, und daß Mittel (24) vorgesehen sind, die das Explosionsmaterial (54,60) innerhalb des Rohrabschnitts (46,58) unmittelbar vor der Entfaltung des Airbag detonieren lassen und dadurch die Enfaltung des Airbag durch die in dem Armaturenbrett (14) ausgebildete Öffnung ermöglichen.

2. Airbag-Installation in der Fahrgastzelle eines Kraftfahrzeugs, die einen Behälter (18) umfaßt, der ein gefaltetes Kissen enthält, das mit Gas aufgeblasen werden kann, wodurch sich der Airbag in die Fahrgastzelle (12) eines Kraftfahrzeugs hinein entfalten kann, wobei der Behälter hinter einem Armaturenbrett (14) in dem Fahrgastraum (12) montiert ist, wobei das Armaturenbrett (14) eine der Innenseite der Fahrgastzelle (12) zugewandte Außenhaut (34) mit sich gleichmäßig und ohne Unterbrechung erstreckender Außenfläche, eine steife Unterfütterung (32,36) unter der Haut (34) des Armaturenbretts mit einer der Form des Musters entsprechenden und mit dem Behälter (18) fluchtenden Öffnung und ein lineares Element (30) hat, das in dem Muster eines oder mehrerer Verschlüsse (28A,B) geformt, über der Unterfütterung (32,36) und unter der Haut (34) des Armaturenbretts befestigt ist und über der Öffnung liegt, dadurch gekennzeichnet, daß das lineare Element ein längliches Element (30) enthält, das knapp unter der Haut (34) des Armaturenbretts angeordnet ist und bei seiner ohne Explosionsreaktion erfolgenden Aktivierung eine große Menge an Wärme erzeugt, um entlang seiner Länge Wärmeenergie abzugeben, die ausreicht, um nur die Haut (34) des Armaturenbretts in diesem Muster zu zerstören, und daß Mittel (24) zur Aktivierung des länglichen Elements (30) unmittelbar vor der Entfaltung des Airbag und somit zur Ermöglichung der Entfaltung des Airbag durch die Öffnung vorgesehen sind, die in dem Armaturenbrett (14) ausgebildet ist.

3. Airbag-Installation nach Anspruch 1, wobei der Rohrabschnitt (46) eine Reihe von nach außen gerichteten Öffnungen (52) hat, die entlang dessen Länge ausgebildet sind, und ferner eine lineare Explosionsladung (54) enthält, die sich in dem Rohr (46) erstreckt und bei ihrer Detonation verdichtete Gase erzeugt, die durch die Öffnungen (52) nach außen treten und zur Zerstörung der Haut (34) des Armaturenbretts führen.

4. Airbag-Installation nach Anspruch 1, dadurch gekennzeichnet, daß der Rohrabschnitt (58) entlang dessen Länge an der Außenseite geschlitzt ist und ferner eine Explosionsladung (60) enthält, die entlang des Rohres (58) in diesem verteilt ist und durch die Aktivierung des linearen Elements entladen wird und dabei eine Flammenfront auf die Haut (34) des Armaturenbretts richtet.

5. Airbag-Installation nach Anspruch 2, dadurch gekennzeichnet, daß das lineare Element aus mehreren länglichen Metallelementen (30) aus verschiedenen Metallen gebildet ist, die in engem Kontakt miteinander stehen, wobei diese Metalle mit der Freisetzung von Wärmeenergie nach Aktivierung durch elektrische Erregung bis zum Erreichen einer Reaktionstemperatur zu einer Legierung verschmelzen.

6. Airbag-Installation nach einem der vorhergehenden Ansprüche, wobei das Armaturenbrett (14) eine steife Konstruktionseinheit ist, die einen die Haut (34) unterfütternden weichen Schaumstoffkern (32) hat.

## Revendications

1. Dans le compartiment des passagers d'un véhicule automobile, une installation pour coussin gonflable constituée d'un logement (18) contenant un coussin plié adapté pour être dilaté par du gaz, ledit coussin gonflable pouvant ainsi être déployé dans le compartiment des passagers (12) d'un véhicule automobile, ledit logement étant installé derrière un panneau de garniture intérieure (14) à l'intérieur dudit compartiment des passagers (12), ledit panneau de garniture intérieure (14) possédant une étendue continue et lisse d'une surface extérieure d'une peau de revêtement (34) orientée vers l'intérieur dudit compartiment des passagers (12), une sous-couche rigide agencée (32, 36) sous ladite peau (34) du panneau de garniture intérieure et possédant une ouverture ayant la forme d'un profil ou motif et alignée avec ledit logement (18), et un élément linéaire (46, 58) ayant la forme du profil d'une ou plusieurs fermeture(s)(28A, B) installé-(es) au-dessus de ladite sous-couche(32, 36) et sous ladite peau (34) du panneau de garniture intérieure en recouvrant ladite ouverture, caractérisée en ce que ledit élément linéaire comprend une longueur de tubulure (46, 58) munie d'une matière explosive (54, 60) contenue à l'intérieur de celle-ci, ladite longueur de tubulure (46, 58) possédant une ou plusieurs ouverture(s)(52, 62) configurée(s) pour diriger l'énergie générée, lorsque ladite matière explosive (54, 60) est mise à feu, versl'extérieur le long de la tubulure afin de décomposer uniquement ladite peau (34) du panneau de garniture intérieure selon ledit profil, et un moyen (24) pour mettre à feu ladite matière explosive (54, 60) dans ladite longueur de tubulure (46, 58) juste avant le déploiement dudit coussin gonflable pour permettre ainsi le déploiement dudit coussin gonflable à travers l'ouverture pratiquée dans ledit panneau de garniture intérieure (14).

2. Dans le compartiment des passagers d'un véhicule automobile, une installation pour coussin gonflable constituée d'un logement (18) contenant un coussin plié adapté pour être dilaté par du gaz, ledit coussin gonflable pouvant ainsi être déployé dans le compartiment des passagers (12) d'un véhicule automobile, ledit logement étant installé derrière un panneau de garniture intérieure (14) à l'intérieur dudit compartiment des passagers (12), ledit panneau de garniture intérieure (14) possédant une étendue continue et lisse d'une surface extérieure d'une peau de revêtement (34) orientée vers l'intérieur dudit compartiment des passagers (12), une sous-couche rigide (32, 36) agencée sous ladite peau (34) du panneau de garniture intérieure et possédant une ouverture ayant la forme d'un profil ou motif et alignée avec ledit logement (18), et un élément linéaire (30) ayant la forme du profil d'une ou plusieurs fermeture(s) (28A, B) installé(es) au-dessus de ladite sous-couche (32, 36) et sous ladite peau (34) du panneau de garniture intérieure en recouvrant ladite ouverture, caractérisée en ce que ledit élément linéaire comporte une élément allongé (30) situé juste en dessous de ladite peau (34) du panneau de garniture intérieure et capable de générer une grande quantité de chaleur sans réaction explosive lorsquil est activé, pour fournir une énergie thermique le long de sa longueur qui est suffisante pour décomposer uniquement ladite peau (34) du panneau de garniture intérieure selon ledit profil, et un moyen (24) pour activer ledit élément allongé (30) juste avant le déploiement dudit coussin gonflable pour permettre ainsi le déploiement dudit coussin gonflable à travers l'ouverture pratiquée dans ledit panneau de garniture intérieure (14).

3. Installation de coussin gonflable selon la revendication 1, dans laquelle ladite longueur de tubulure (46) possède une série de trous (52) orientés vers l'extérieur et agencés tout au long de celle ci, et comporte également un charge explosive linéaire (54) qui s'étend à l'intérieur dudit tube (46), ladite charge générant des gaz pressurisés lorsqu'elle est mise à feu, lesdits gaz pressurisés étant évacués à travers lesdits trous (52) et aboutissant en la décomposition de ladite peau (34) du panneau de garniture intérieure.

4. Installation de coussin gonflable selon la revendication 1, dans laquelle ladite longueur de tubulure (58) est fendue tout au long de celle-ci, du côté externe, et comporte également une charge explosive (60) distribuée le long et à l'intérieur de ladite tubulure (58), cette charge étant déchargée par ladite activation dudit élément linéaire, en dirigeant un front de flammes vers ladite peau (34) du panneau de garniture intérieure.

5. Installation de coussin gonflable selon la revendication 2, dans laquelle ledit élément linéaire est constitué d'une pluralité d'éléments métalliques allongés (30) avec des métaux différents, en contact mutuel intime, lesdits métaux s'alliant ensemble avec le dégagement d'énergie thermique lors de l'activation par excitation électrique jusqu'à ce qu'une température de réaction soit atteinte.

6. Installation de coussin gonflable selon l'une quelconque des revendications précédentes, dans laquelle ledit panneau de garniture intérieure (14) est une structure rigide unitaire possédant un noyau en mousse moelleuse (32) agencé sous ladite peau (34).
